# EUROPEAN PATENT APPLICATION

(11) **EP 2 201 834 A1**
(43) Date of publication of application: **30.06.2010**
(21) Application number: 08805320.2
(22) Date of filing: 10.07.2008
(51) Int. Cl.: A01G 25/16

(54) **CENTRALISED, AUTOMATED AND REMOTE WATERING SYSTEM**

(30) Priority: 13.07.2007 ES 200701970
(71) Applicant: Samcla-Esic, S.L., 08302 Mataró (Barcelona) (ES)
(72) Inventor: SAMON I CASTELLÀ, Jordi, E-08302 Mataró (Barcelona) (ES); CLAUS I MARCH, Manel, E-08302 Mataró (Barcelona) (ES)
(74) Representative: Matamoron Hernandez, José Pedro
(86) International application number: PCT/ES2008/000490
(87) International publication number: WO 2009/010613

(57) **Abstract**

The invention relates to a system for the centralised, remote management of the watering of large areas, such as city parks and gardens, consisting of : a watering management server computer (1) including a device (11) for connecting to a global access communication network (4) for the remote management thereof, a mobile or landline telephone access device (13) and a remote service device (13); a series of communication hubs (2) comprising a mobile or landline telephone access device (21), a watering program storage memory (23) and microprocessor (22), a radio frenquency apparatus (24) for communicating with watering devices (3) and an electric power source (25); and a plurality of watering devices (3) including a radio frequency communication module (33) enabling remote activation, programming and status querying from a nearby hub and a self-contained power source.

## Description

### Aim of the invention

The present invention relates to an automated, remote, centralised watering system of the type the comprises several watering devices which are operated at a distance (remote), and from a single spot (centralised), this spot being any place in the world featuring a device that can surf the Internet.

### Background to the invention

The use of different types of watering systems which permit the automated or semi-automated performance of watering in parks, gardens and crops is widely known.

The use of these watering devices is widespread in towns, as it allows to reduce significantly the labour devoted to green areas, especially in watering tasks. These devices consist basically of one or several electric valves and a timer device, either mechanic, electric or digital, which enables to set the start time for the watering by opening the electric valves, and the end of watering by shutting the valves until the cycle is started again.

In the past, these programming devices worked exclusively with a connection to an electric power source. The use of battery-operated programming devices makes it considerably easier to install them, as they do not require to lay power supply networks for their performance, but instead the electric valves controlling the devices are set directly in the water supply pipe of the area, and only the batteries must be replaced periodically.

As it has been mentioned before, and bearing in mind that it is quite usual that the area to be watered is a park, a green area or a leisure area, a zoo or any other area, the number of watering devices can be quite high, and their re-programming in order to suit the watering to dry or wet seasons may be slow and difficult, and consequently, some remote control watering devices have appeared. These devices can be divided in two types, radio frequency-controlled and mobile phone-controlled.

Radio frequency-controlled watering systems comprise a communication module with a radio-frequency set which permits to control it via a remotely operated console, thus allowing a single console to control several watering devices some meters around. However, these control devices are not useful to manage all the watering devices of a mid-size town. Moreover, there is another problem: the different manufacturers set their own radio-frequency protocols and devices, and therefore, they are incompatible with other devices.

At the same time, phone-operated watering devices comprise preferably a mobile phone access module or device, optionally a landline telephone, connected to a communication network, so that new programmes can be entered into the memory by messages or tone-coded calls. These watering devices feature the advantage that they can be controlled from any other place, as far as there is coverage in the location of the watering device. However, it has the disadvantage that the servicing of the line is expensive, and its cost is dramatically increased when a multiple number of devices exist, as the number of lines to be serviced is also multiplied. Besides, those watering devices must be programmed, one by one, through the corresponding phone calls. Another important disadvantage is that the module to access the telephone network has significant power consumption, and therefore, the system can only operate in areas connected to the electric power supply network. The use of alternative power supply systems, such as solar energy systems, is not economically viable for this type of systems, as most of the spots featuring battery-operated programmers control one or two electric valves, and therefore, the consequences on the cost of every watering spot are very high.

The American Patent no. 4.646.224 relates only to a local watering programmer, capable of setting the watering cycles and their duration for each area according to the specific data of the terrain, such as the type of substrate, the type of vegetation, the type of sprinkler, and time data, such as the watering days and the start time of the watering. All these data are entered manually by an operator in the programmer.

The American Patent no.4.827.155 relates only to a local watering programmer, developed with solid-state technology. This technology permits to create a more user-friendly interface, introducing an alpha-numeric screen and a keyboard.

The American Patent no.6.647.319 B1 refers only to a local, solid-state watering programmer, characterised by the fact that it requires only three buttons to enter the programmes, and a small set of LED's to report the user on its status. It is a system that gives preference to cost and simplicity, reducing the interface with the user to the minimum.

The American Patent no.5.602.728 refers only to a local, solid-state watering programmer, characterised by a simple user interface which can be disconnected from the control system which is installed in the watering area. This interface can be connected to a computer in order to upload programmes and subsequently download them in local programmers, and the same interface can be used for all of them.

The International Patent WO 02/099534 A1 relates only to a remote switch device, characterised by the fact that the standby status (usually on or usually off) can be changed sending remote commands. In no case the device can change the working programme of the local controller, being it watering or lighting (examples mentioned in the document), or report information from the controller to the central station, as it merely performs as an enabling or disabling element, either cutting the power supply of the local control equipment or using a possible disabling input from it.

The International Patent WO 99/48354 relates only to a local watering control system based on the theoretical calculation of water in a set area, such as from the data collected by a meteo station set in a spot of the area to be controlled (sub-area), and the data collected by a rain radar. The data are kept in a database, and from them, the water content that these conditions provide is calculated. To this aim, a mathematical formula is used, which is described in the specification of the patent. The system is characterised by the presence of a computing system capable of comparing the amount of water required (entered by an operator), and the amount available according to the calculation. According to the result of the comparison, the activation of the watering controller related to the area under controlled is permitted or not.

### Description of the invention

The automated, remote and centralised watering system, object of this invention, features some technical specifications which are addressed to ease the full control of the watering system of a city or a wide area with a great number of autonomous watering devices, allowing a quick and efficient management, while providing a suitable remote control in order to improve its adaptability and the immediate solution of incidences.

Effectively, the system comprises, besides the watering devices:
- A watering management server computer, featuring a connection device to a global access communication network, such as Internet, a device to access a mobile or landline telephone network and a remote control system.
- A series of communication hubs, which consist of an access to a mobile or landline telephone network, a chip and a memory to store watering programmes, radio-frequency equipment to communicate with watering devices and an electric power supply.

With this system it is possible to perform the programming of the different watering devices, by means of a device or a control spot featuring access to the Internet in order to connect the service control server computer, for example through a desktop, a laptop or a digital assistant (PDA), by simply using a built-in web navigator. The server computer consists, as a remote service device, a web site server with an intuitive control interface, thus enabling the user/s to manage the different watering devices in a fully transparent way. The remote service device of the control server computer can feature safety measures and privilege authorisations for each authorised user.

In this way, hubs allow a distribution by sectors of the different watering devices that must be controlled, each hub controlling a specific influence area, where it can manage a virtually unlimited number of watering devices via radio-frequency transmissions, although hubs can still be accessed from the central management server computer through the connection via mobile telephone of the hub. This distribution allows reducing the number of mobile phone lines required to the minimum, while keeping the full operation of the watering devices.

Hubs feature the advantage that they must not be installed next to the watering devices or in cabinets nearby, as their communications in both directions are wireless.

The hub can also feature a connection, such as an analogic-digital converter, to an outdoor sensor, such as a rain, wind or temperature sensor, among others, thus determining the variable status that can affect the watering requirements.

When it is deemed necessary for a hub to have a wider range, the system can feature, at least, one radio-frequency antenna between the hub devices and the watering devices.

The electric power supply of the hub can be of different types, such as an autonomous electric battery device, or a device which generates electric power from renewable energies, such as a windmill or photo voltaic cells. However, due to the fact that its mobile phone access device can have a significant power consumption for this type of supply systems, and bearing in mind that the location of the hub can be anywhere, as long as it is within the range of its associated watering devices, it is more practical and cheaper to connect it directly to the electric power supply network.

The watering device can consist of at least one connection to accessories, such as an analogic digital converter, to couple an outdoor sensor, a soil humidity sensor or a flow measurement sensor. It can feature, at least, one battery status measurement system and a system for the measurement of the coverage level of the radio-frequency signal. All of it in order to report all this information through the communication module to the hub, which will send it to the server computer for decision making and in order to be checked from control spots.

The watering device can also perform as a remote switch device, cheaper, with the aim of taking advantage of the existing local watering programming systems which are currently operating, thus permitting to manage in a remote and centralised way their enabling and disabling. This operating mode will in no case permit the modification of the programming of the local existing equipment.

The fact of using the radio frequency in order to communicate with the watering device allows to design equipment with a very low consumption rate, so it can be installed in the same location as the existing equipment, without requiring any additional work. On the other hand, and also due to the low consumption rate, the watering devices can be supplied - at a very low cost - with electric power generators using renewable energies.

### Description of the drawings

In order to supplement this description, and with the aim of easing the understanding of the features of the invention, a set of drawings is attached to this specification where the following issues are represented, as an illustration and without limitation.

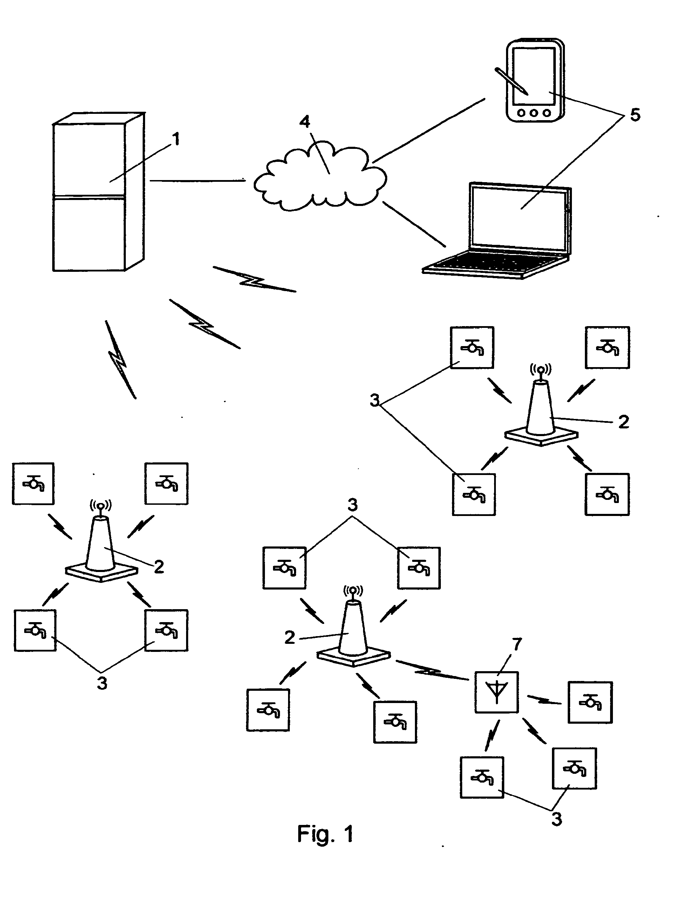

- Fig. 1 shows an outline of the system.

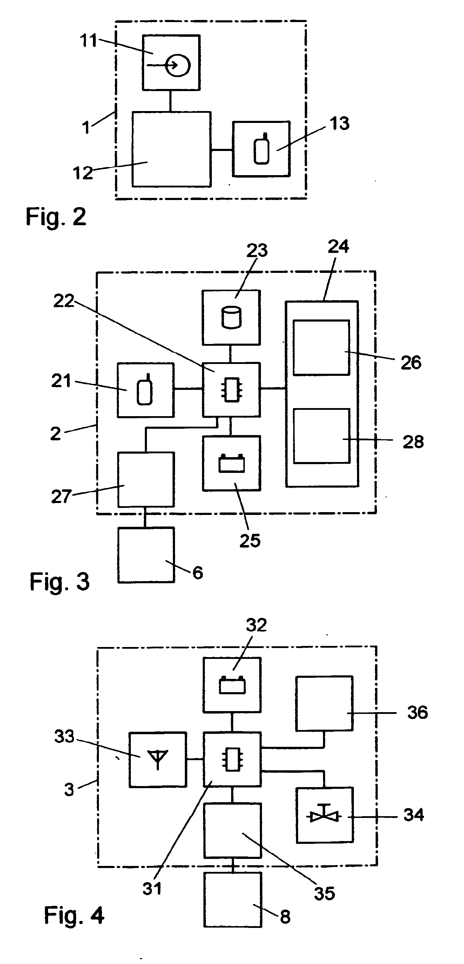

- Fig. 2 shows an outline of the blocks of the server computer.
- Fig. 3 shows an outline of the blocks of the hub.
- Fig. 4 shows an outline of the blocks of the watering device.

### Preferred embodiment of the invention

As it can be seen in the referred figures, the system comprises a watering management server computer (1), several communication hubs (2) and several watering devices (3) for watering control in flower beds, parks, green areas and similar.

The watering management server computer (1) comprises a connection device (11) to a global access communication network (4) from any remote device (5), in this case desktops, laptops and digital assistants (PDAs), for the remote control of the watering devices (3), managing a remote service device (12), in this case a web server. Moreover, the server computer (1) comprises a telephone access device (13) in order to communicate with the hubs (2).

Each communication hub (2) comprises a mobile phone access device (21) to communicate with the management server computer (1), from which the programmes are downloaded to be run in the different watering devices (3). Besides, the hub (2) comprises a microchip (22) and storage memory (23) of the watering programmes sent from the server computer (1). The hub (2) also comprises a radio-frequency equipment (24) to communicate with the watering devices (3), and an electric power source (25). The radio-frequency equipment (24) for the communication consists of a transmitting module (26) and a receiver module (28). The hub (2) features a connection (27) to a rain sensor (6).

In a preferred embodiment of the invention, the system may comprise at least a radio-frequency signal antenna (7) between a hub (2) and the watering device (3), thus permitting that such radio-frequency transmission can achieve a wider range.

In a preferred embodiment of the invention, a watering device (3) consists of a micro-controller (31), a battery (32), a radio-frequency communication module (33), a power amplifier (34) for the programmed management of an electric valve, and a status monitoring module (36) of the device, such as the battery level and the signal coverage. This watering device (3) also comprises a connection (35) to an outdoor sensor (8) for the monitoring of environmental and physical amounts, such as the flow.

Once the nature of the invention has been thoroughly described, together with an example of a preferred embodiment, it is hereby certified, for all legal intents and purposes, that the materials, shape, size and disposition of the described elements can be modified, as long as it does not imply an alteration of the essential features of the invention which are claimed below.

## Claims

1. Automated, remote-operated and automated irrigation system, of the type that comprises several irrigation devices (3), with a radio-frequency communication module (33) to operate it and/or to program it remotely, **characterized by** the fact that it comprises:
- a server computer (1) for irrigation management, which features a connection device (11) to a global access communication network (4), a device to access landline or mobile phone network (13) and a remote service device (12);
- a series of communication hubs (2), which comprise a device to access landline or mobile phone network (21), a microchip (22), and storage memory (3) for irrigation programs, radio-frequency equipment (24) to comunicate with the irrigation devices (3) and an electric power source (25).

2. System, as per claim 1, **characterized by** the fact that it comprises, at least, one radio-frequency signal antenna (7) between the hubs (2) and the irrigation devices (3).

3. System, as per claim 1, **characterized by** the fact that the hub (2) comprises, at least, one connection (27) to an outdoor detector (6).

4. System, as per claim 1, **characterized by** the fact that the irrigation device (3) comprises, at least, one connection (35) to an outdoor and/or indoor detector (8) of weather conditions or performance conditions.
